# EUROPEAN PATENT SPECIFICATION

(11) **EP 4 626 046 B1**
(45) Date of publication and mention of the grant of the patent: **18.11.2026**
(21) Application number: 25151666.2
(22) Date of filing: 14.01.2025
(51) Int. Cl.: H04W 4/44, H04W 4/90

(54) **EMERGENCY SITUATION CONTROL METHOD AND DEVICE**
VERFAHREN UND VORRICHTUNG ZUR NOTFALLSITUATIONSSTEUERUNG
PROCÉDÉ ET DISPOSITIF DE COMMANDE DE SITUATION D'URGENCE

(30) Priority: 27.03.2024 KR 20240041563; 28.06.2024 KR 20240085513
(43) Date of publication of application: 01.10.2025
(73) Proprietor: Hyundai Mobis Co., Ltd., Seoul 06141 (KR)
(72) Inventor: LEE, Jae Yong, Yongin-si, Gyeonggi-do 16891 (KR)
(74) Representative: Jung, Minkyu

(56) References cited:
- CN-A- 114 454 895
- US-A1- 2022 388 505

## Description

### BACKGROUND

### 1. Field

Embodiments relate to an emergency situation control method and device.

### 2. Description of the Related Art

In general, a vehicle is equipped with various sensors and an electronic device, for the convenience of a user. Particularly, research on the advanced driver assistance system (ADAS) is actively being conducted for the convenience of users. Furthermore, autonomous vehicles are under active development.

There is a need for a method of handling an emergency situation by transmitting and receiving data among an autonomous driving system (ADS), an infrastructure, a network, and a user equipment (UE). US 2022/388505 A1 discloses mechanisms in computer assisted and/or automated driving (CA/AD) vehicles for protecting vulnerable road users (VRUs). In the document, the mechanisms are described to include checking for the CA/AD vehicles driving policy to protect in-danger VRUs and notifying other CA/AD vehicles and roadside infrastructure when a potentially dangerous situation is detected. CN 114 454 895 A discloses a method and equipment for taking over of an autonomous vehicle and the vehicle. In the document the method is described to comprise determining a mobile device of a driver connected with a vehicle, sending a take-over request to the mobile device in an automatic driving mode, the take-over request being used for requesting a driver to take over driving of the vehicle, receiving an operation instruction from a driver, and entering a driving mode in which the driver takes over the vehicle based on the operation instruction.

### SUMMARY

Accordingly, the disclosure is directed to an emergency situation control method and apparatus that substantially obviate one or more problems due to limitations and disadvantages of the related art.

Embodiments provide a method and device for safely and efficiently controlling an emergency situation.

Embodiments provide an emergency situation control method and device for quickly handling an emergency situation while allowing a vehicle to drive autonomously.

The objects to be achieved by the disclosure are not limited to what has been particularly described hereinabove and other objects not described herein will be more clearly understood by persons skilled in the art from the following detailed description. An emergency situation control method and device according to embodiments may enable an ADS to efficiently transmit and process information for autonomous driving. An emergency situation control method and device according to embodiments may enable a UE to efficiently transmit and process information for autonomous driving.

An emergency situation control method and device according to embodiments may support autonomous driving to be safely performed at ADS level 4 or higher.

The invention is defined by the appended claims.

The effects that are achievable by the disclosure are not limited to what has been particularly described hereinabove and other advantages not described herein will be more clearly understood by persons skilled in the art from the following description.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. For a better understanding of the various embodiments described below, the following description of the embodiments should be read in conjunction with the accompanying drawings, which include corresponding parts with like reference numbers throughout the drawings. In the drawings:
FIG. 1 shows a state diagram according to embodiments;
FIG. 2 illustrates a minimal risk manoeuvre (MRM) according to embodiments;
FIG. 3 illustrates an MRM classification according to embodiments.
FIG. 4 illustrates a vehicle control device according to embodiments;
FIG. 5 illustrates a vehicle structure according to embodiments;
FIG. 6 illustrates an example of autonomous driving of an automated driving system (ADS) according to embodiments;
FIG. 7 illustrates data communication among an ADS, a user equipment (UE), and a network/infrastructure according to embodiments;
FIG. 8 illustrates data communication among an ADS, a UE, and a network/infrastructure according to embodiments;
FIG. 9 illustrates data communication among an ADS, a UE, and a network/infrastructure according to embodiments;
FIG. 10 illustrates data communication among an ADS, a UE, and a network/infrastructure according to embodiments; and
FIG. 11 illustrates the structures of an ADS and a UE according to embodiments.

### DETAILED DESCRIPTION

Preferred embodiments of the embodiments will be described in detail, examples of which are shown in the accompanying drawings. The following detailed description with reference to the accompanying drawings is intended to illustrate preferred embodiments of the embodiments rather than to present only embodiments that can be implemented in accordance with the embodiments. The following detailed description includes details to provide a thorough understanding of the embodiments. However, it will be apparent to those skilled in the art that embodiments can be practiced without these details.

Although most terms used in the embodiments have been selected from general ones widely used in the art, some terms have been arbitrarily selected by the applicant and their meanings are explained in detail in the following description as needed. Thus, the embodiments should be understood based upon the intended meanings of the terms rather than their simple names or meanings.

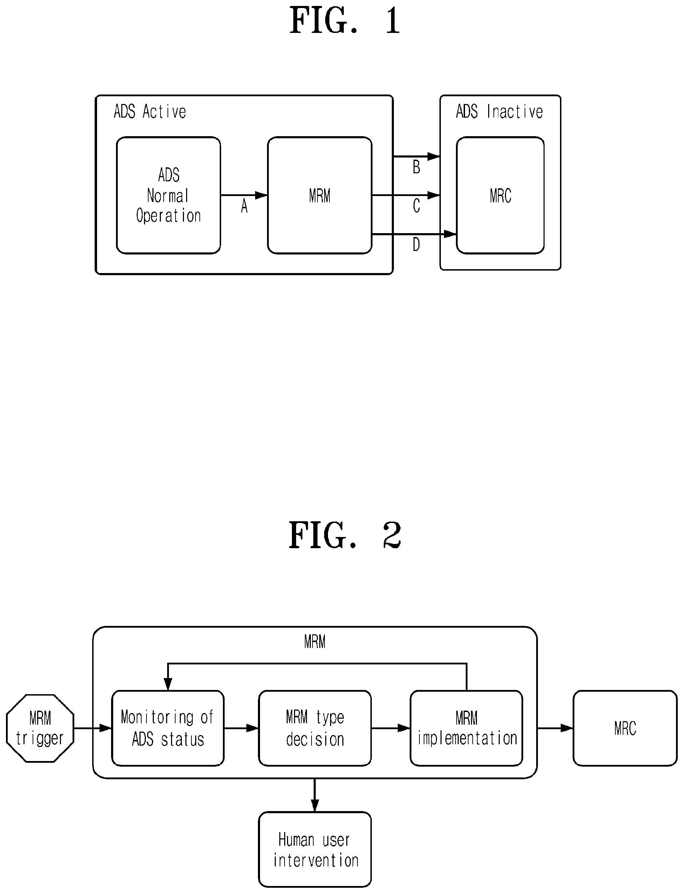

FIG. 1 shows a state diagram according to embodiments.

FIG. 1 shows an example MRM state diagram for MRM (3.1 Minimum Risk Manoeuvre). The specific states and switching conditions of MRM may vary from one automated driving system (ADS) to another.

The definitions of terms according to embodiments are as follows.

Minimum risk manoeuvre (MRM) refers to an operation performed by an ADS to reach a minimum risk condition. Minimum risk condition (MRC) is a stable, stationary state to which the user or ADS may bring the vehicle after performing a dynamic driving task (DDT) fallback to reduce the risk of a collision when a given movement cannot or should not be continued. Subject vehicle refers to a vehicle equipped with an ADS capable of performing MRM. Standstill management is an action taken by the ADS to maintain the vehicle in the MRC. Lane boundary refers to the boundary of a lane as determined by visible lane markings or, in the absence of visible lane markings, the boundary of a lane as determined by incidental visible road features or other means such as positioning related to digital maps, magnetic markers, etc. Road shoulder is a portion of a road that is placed at the edge of the road, outside the lane boundaries, to allow emergency vehicles to bypass traffic congestion or to provide a place for troubled vehicles to exit from moving traffic. Acceleration control refers to controls that use vehicle functions, such as powertrain control, to produce positive acceleration. Deceleration control refers to controls that use vehicle functions, such as brakes, to generate negative acceleration. ADS Active indicates that the ADS performs the entire DDT in the ADS active state, which is the ADS normal operation state or MRM state. In the case where the state is switched from the ADS Active to ADS Inactive (B), the ADS deactivation procedure defined for each ADS for the active ADS continues to apply. ADS Normal Operation means that in the ADS normal operation state, the ADS performs the DDT as the system is intended to operate. In the ADS Normal Operation state, the ADS determines whether the MRM is needed. When it is determined that the MRM is needed, the ADS switches to MRM (A). In the minimum risk manoeuvre state, the ADS controls its vehicle to reach the MRC state.

Abbreviations used in this document are defined as follows. ADS (Automated Driving System), DDT (Dynamic Driving Task), FRU (Fallback-Ready User), HMI (Human Machine Interface), MRM (Minimum Risk Manoeuvre), MRC (Minimum Risk Condition), OEDR (Object and Event Detection Response), ODD (Operational Design Domain), ROI (Region of Interest), RTI (Request to Intervene), SV (Subject Vehicle).

The MRM state is operated as follows. The ADS monitors the ADS status. The ADS determines the type of MRM. The ADS controls the subject vehicle (SV) to execute the MRM. The ADS notifies other traffic participants about the MRM execution. In the case where the SV has passengers, ADS notifies all passengers inside the SV about the MRM execution.

When the state is switched from MRM to ADS Inactive (C), the conditions for default ADS implementation in the inactive state may be applied, but additional conditions may be applied during an ongoing MRM.

In the case where the state is switched from MRM to MRC (D), the vehicle speed is set to 0 (V_sv=0 [kph]), standstill management is enabled, and a risk warning light is applied.

In the case of ADS Inactive, the ADS is released from the state and does not perform the DDT function.

The MRC is a state where the risk is minimum, for example, the subject vehicle is stable and stationary.

In the MRC state, the ADS performs standstill management. The ADS turns on risk warning lights. The ADS communicates with the activated human user.

As used herein, a vehicle may be referred to as a means of transportation, including robots, urban air mobility (UAM), and automated driving devices.

FIG. 2 illustrates a minimum risk manoeuvre (MRM) according to embodiments.

FIG. 2 illustrates an example MRM process for MRM. The detailed process of the MRM may vary from ADS to ADS.

When an ADS requests an MRM, the MRM is performed through the following steps Monitoring of ADS status: First, the ADS checks the status of the system. It determines the current DDT performance capabilities of the ADS by analyzing the severity of the malfunction, identifying its impact on the system, and checking the conditions of related system components.

Determining MRM type: The most appropriate MRM type is selected. The determination includes internal (system status) and external (e.g., traffic density, ODD) information. By default, it is recommended to maintain the MRM type selection. However, the type may change if significant internal or external factors change or if changes in traffic conditions make the selected MRM infeasible. In the case where the MRM type changes while the ADS is performing the MRM, the ADS ensures that multiple MRM type changes do not delay the system from reaching the MRC in a reasonable and safe manner. MRM implementation: Includes longitudinal and lateral control to perform the selected MRM. The above steps iterate until the vehicle reaches the MRC state. During the MRM process, a human user may intervene and take over the DDT.

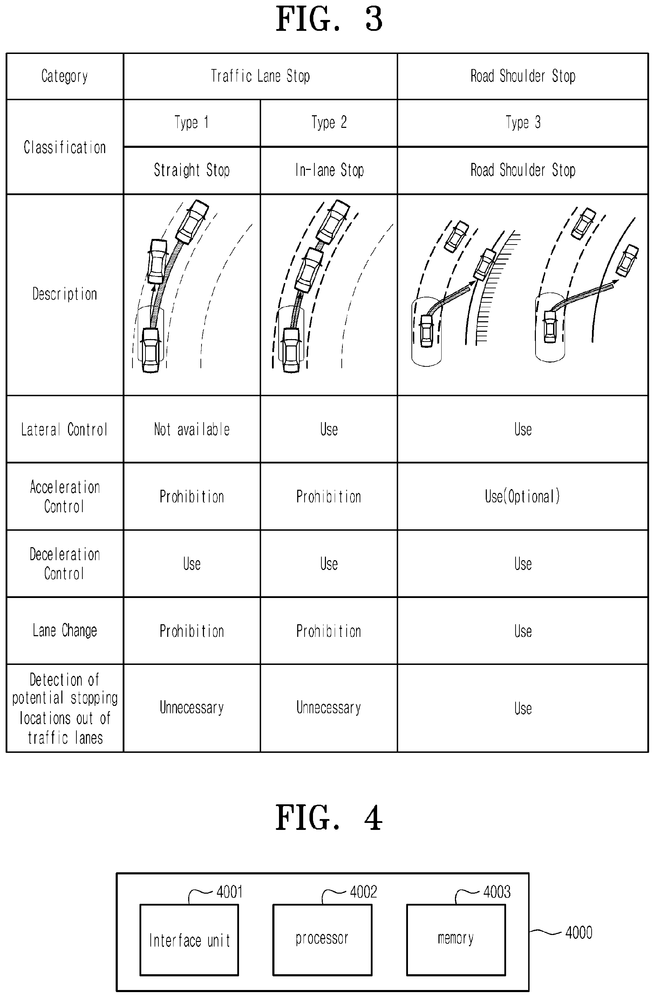

FIG. 3 shows an MRM classification.

Depending on the internal and external conditions of the ADS-equipped vehicle, the available MRMs may vary. MRMs are categorized into three types as shown in FIG. 3. The MRM types may be referred to as MRM Type 1, MRM Type 2, and MRM Type 3. MRMs may be categorized into Traffic Lane Stop and Road Shoulder Stop based on the location of the stop. Additional classes may be added according to embodiments. MRM Type 1 represents the straight stop, where lateral control may not be available, acceleration control may be prohibited, deceleration control may be used, lane change may be prohibited, and detection of potential stopping locations out of traffic lanes may not be necessary.

MRM Type 2 represents the traffic lane stop, where lateral control may be available, acceleration control may be prohibited, deceleration control may be used, lane change may be prohibited, and detection of potential stopping locations out of lanes may be unnecessary.

MRM Type 3 represents the shoulder stop, where lateral control may be available, acceleration control may be optionally used, deceleration control may be used, lane change may be used, and detection of potential stopping locations out of lanes may be used.

The traffic lane stop is a method of emergency stopping among other road users when a critical malfunction occurs in the subject vehicle or its ADS. There are two types of traffic lane stops: straight stop and in-lane stop. The traffic lane stop may affect traffic flow and may potentially contribute to secondary collisions depending on the work area.

The straight stop is a method of stopping a vehicle using only longitudinal control without active lateral control. The straight stop uses longitudinal deceleration control to stop the vehicle when lateral control is not available. The straight stop is applied only when lateral control is not possible available (e.g., lane detection failure, malfunction of the steering actuator) or there is no lane to follow in the ODD (e.g., a valet parking system).

Because lateral control is not available during the straight stop MRM, the vehicle may cross the lane boundary or stop outside the lanes. The straight stop includes deceleration control only.

The in-lane stop is a method of stopping the vehicle within the boundaries of the lane in which the vehicle is traveling when the MRM is initiated. Longitudinal deceleration and lateral control are used, as well as environmental (sensor, map data, etc.) information about the path (and optionally a target ahead). The in-lane stop may be applied in situations where lane change is not possible or it is not possible to drive to reach a shoulder stop location. The MRC is achieved within the boundaries of the current lane.

Road shoulder stop: For road shoulder stops, both lateral and longitudinal controls are used to ensure that the subject vehicle stops as far away from the traffic flow as possible. As a result of the shoulder stop manoeuvre, at least a portion of the vehicle remains stationary outside the lane. The road shoulder stop manoeuvre is intended to minimize the impact of the MRM on nearby road users and to help passengers exit the vehicle in a safe manner.

The road shoulder stop uses both longitudinal and lateral controls as well as information about the driving environment (sensor, map data, or other means for driving environment awareness) related to the road ahead and the related lane. For road shoulder stops, the ADS may determine the location to stop the vehicle and determine whether the vehicle can reach the location to stop.

Lane boundary crossing may be determined by the ADS performing MRM, and the number of lane boundary crossings is not limited. Lane change is made only toward the target shoulder intended by the MRC. If safe interaction with other vehicles is necessary, acceleration control may be performed while driving to a potential stopping location. The MRC may be achieved on a hard road shoulder by partially or completely removing the SV from the active lane.

Changing the MRM type: During MRM execution, an additional relevant event may occur inside or outside the vehicle, or the ADS may recognize additional information. When the ADS determines that it is not appropriate to reach the initially intended MRC, the ADS may change the intended MRC to a lower MRM type. The MRM type may only be changed in one direction: from a higher type to a lower type. If the MRM type is changed while the ADS is performing the MRM, the ADS ensures that multiple MRM type changes do not delay the system from reaching the MRC in a reasonable and safe manner.

FIG. 4 illustrates a vehicle control device according to embodiments.

A vehicle control device 4000 according to the embodiments is a device that controls the operation of a vehicle according to embodiments. The vehicle control device may be referred to as an integrated autonomous vehicle controller 600. The vehicle control device may include an interface unit 4001, a processor 4002, and a memory 4003. The memory may store instructions, signaling information, data, and the like for performing operations according to embodiments. The memory may be connected to the interface unit and the processor to transmit and receive necessary signals.

The interface unit may receive signals, information, data, and the like delivered to the vehicle control device and pass the same to the memory and/or the processor. It may also deliver signals, information, data, and the like generated by the memory and/or processor to the vehicle and/or the driver and/or passengers.

The processor may perform control operations of the vehicle according to embodiments based on the data and/or instructions stored in the memory.

The vehicle control device of FIG. 4 may correspond to a device mounted on the vehicle, or may correspond to a terminal device that controls the vehicle.

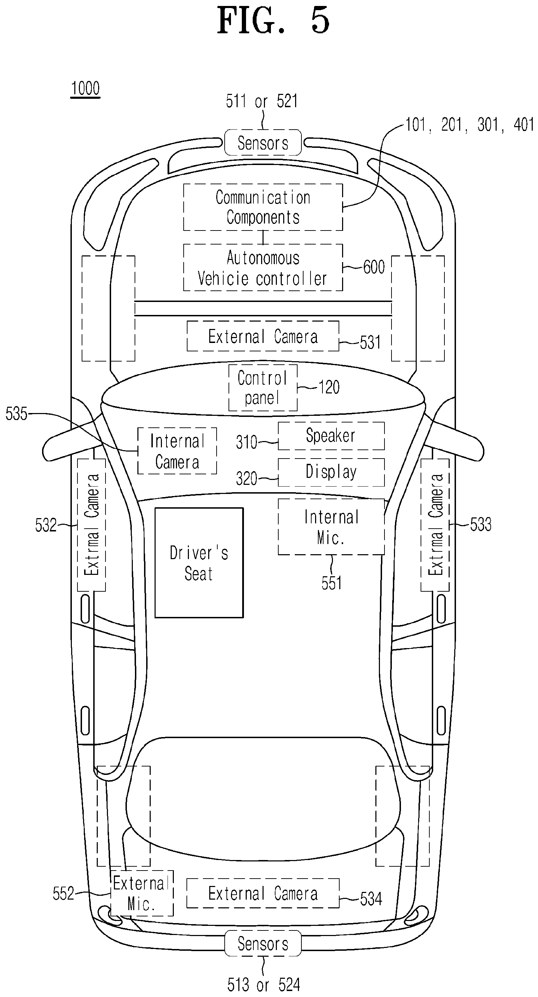

FIG. 5 illustrates a vehicle structure according to embodiments.

A vehicle according to embodiments may be configured as shown in FIG. 5 and may perform autonomous driving by an autonomous driving control system. The vehicle according to the embodiments may be referred to as an autonomous vehicle, a robot, urban air mobility (UAM), an autonomous driving device, and the like.

The autonomous vehicle 1000 may be implemented mainly based on an integrated autonomous vehicle controller 600 that transmits and receives data necessary for autonomous driving control of the vehicle through a driving information input interface 101, a travel information input interface 201, an occupant output interface 301, and a vehicle control output interface 401. The integrated autonomous vehicle controller may be referred to herein as a controller, processor, or simply a control unit.

The integrated autonomous vehicle controller may acquire driving information according to an occupant's operation of a user input unit in either an autonomous driving mode or a manual driving mode of the vehicle through the driving information input interface. The user input unit may include a driving mode switch and control panel 120 (e.g., a navigation terminal mounted on the vehicle, a smartphone or tablet carried by the occupant, etc.). Thus, the driving information may include travel mode information and navigation information about the vehicle.

In addition, the integrated autonomous vehicle controller may provide warning information along with the driving state information described above to the driver through the occupant output interface when it is determined that the driver needs to be warned in the autonomous driving mode or manual driving mode of the vehicle. A speaker 310 and a display 320 may be included to audibly and visually output such travel state information and warning information. The display may be implemented as the same device as the control panel described above, or may be implemented as a separate, independent device.

Further, the integrated autonomous driving controller may communicate control information for controlling the driving of the vehicle in the autonomous driving mode or manual driving mode of the vehicle to sub-control systems applied to the vehicle via the vehicle control output interface. The sub-control systems for controlling the driving of the vehicle may include at least one of a motor control system, an engine control system, a brake control system, and a steering control system. The integrated autonomous vehicle controller may communicate at least one of the motor control information, the engine control information, the brake control information, and the steering control information as control information to each of the sub-control systems via the vehicle control output interface.

The integrated autonomous driving controller may acquire driving information according to the driver's operation and travel information indicative of the travel state of the vehicle via the driving information input interface and the travel information input interface, respectively, and may provide travel state information and warning information generated based on the autonomous driving algorithm via the occupant output interface.

To ensure reliable autonomous driving of the vehicle, the autonomous driving device according to embodiments may include sensors configured to detect objects around the vehicle, such as neighboring vehicles, pedestrians, roads, or fixed facilities (e.g., traffic lights, milestones, traffic signs, construction fences, etc.).

The sensors may include one or more of a LiDAR sensor, a radar sensor, and a camera sensor to detect nearby objects outside of the vehicle. The sensors may include a front LiDAR sensor 511, a front radar sensor 521, a rear LiDAR sensor 513, a rear radar sensor 524, a left camera sensor 532, a right camera sensor 533, an internal camera sensor 535, a front camera sensor 531, and a rear camera sensor 534. The sensors may be associated with microphones 551 and 552.

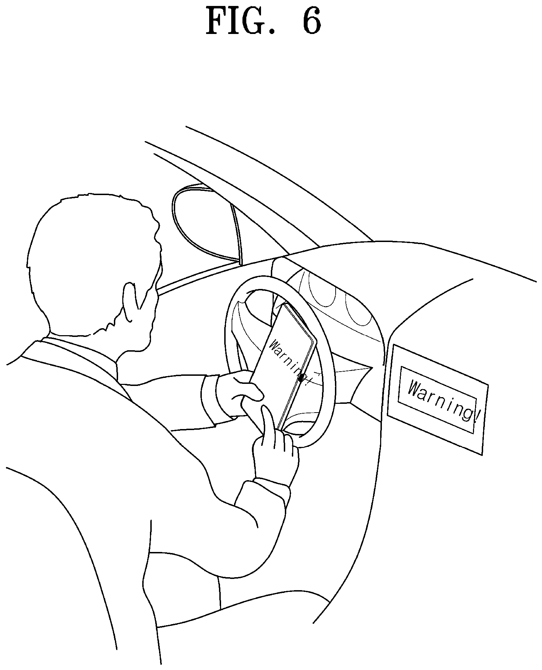

FIG. 6 illustrates an example of autonomous driving of an ADS according to embodiments.

An emergency situation control device according to embodiments may be referred to as an automated driving system or ADS. Embodiments relate to a method and device for handling an emergency situation by transmitting and receiving data among a user equipment (UE), an ADS, an infrastructure, or a network.

The international standard ISO 19560 (Information interface framework between automated driving system and user, IIF) defines an information interface framework between an automated driving system (hereinafter, referred to as 'ADS') and a user (UE).

For example, the international standard ISO 19560 only discloses an emergency situation handling method based on data transmission and reception between an ADS and a UE, without comprehensively considering data received from an infrastructure or a network.

Embodiments include an emergency situation handling method based on data transmission and reception among a UE, an ADS, and an infrastructure or network.

More specifically, an operation of notifying emergency safety information, an operation of requesting a fallback/appropriate action from a user (driver), or an operation of pre-notifying future autonomous driving function termination is not limited to the case where a request is transmitted from the ADS to the UE, but also covers the case where the request is pre-transmitted from the network to the UE and the case where the request is pre-transmitted from the infrastructure to the UE. Herein, an operation between the ADS and the UE is required.

When the ADS, which is a device according to embodiments, performs autonomous driving with vehicle control authority, the ADS may transmit and receive information to and from the UE, for driving-related communication with the user. The ADS may transmit an MRM execution notification, a user fallback (and/or action) request, a pre-notification of future autonomous driving termination, and so on to the UE. While the autonomous driving level of the ADS is described as Level 4 in the disclosure, by way of example, it is not limited to Level 4.

The ADS has to transmit information between users under the circumstances. For example, when the autonomous driving level needs to be reduced or canceled for some reason, the user should be notified of information that prompts the user to take an action, such as monitoring the surroundings or driving. In addition, there may be cases where the system needs to identify the user's intent when performing a function.

In addition, since a user at ADS Level 3 or above may use some device, such as a smartphone, to perform some auxiliary task while in the driver's seat, this could potentially become a problem in the near future, when the ADS needs to notify the user of the following. When needed, an important message is transmitted through this device. The ADS may optionally receive some additional information from the user through a device other than onboard devices, if paired with the ADS.

Embodiments provide a classification of notifications that a system at ADS Level 3 or above provides to the user. The basic classification of notifications to the user is based on two broad criteria that lead to differences in the types of information provided to the user: (1) safety criticality: when the user needs to take an action or respond, or the user needs to know, or user information is provided only for comfort or convenience; and (2) time criticality: information exchanged between the ADS and the user includes the following example: the ADS requests an immediate action from the user. The ADS notifies the user that an action is required in the near future. The ADS notifies the user of a change in an operation status. The user's mobile device notifies the ADS of the user's current status. The user is usually a person sitting in the driver's seat, but may also include a passenger in a self-driving vehicle.

The user may perform a DDT as a fallback to an MRC. In the event of an ADS failure, the user may resume the DDT. When the end of an ODD is near, the user may resume the DDT. The ADS may perform the DDT to achieve the MRC in the event of a vehicle failure. When the user ignores a message from the ADS in the event of an ADS failure, the ADS may achieve the MRC. The ADS may display a message requesting replacement to the user, or display an ADS replacement message if the user ignores a message indicating that the ADS achieves the MRC when the end of the ODD is closed. The ADS according to embodiments may perform emergency situation control in such a situation.

In addition, embodiments include cases where the ADS transmits and receives information to and from the user (human driver) and the user (human driver) transmits and receives information to and from the ADS.

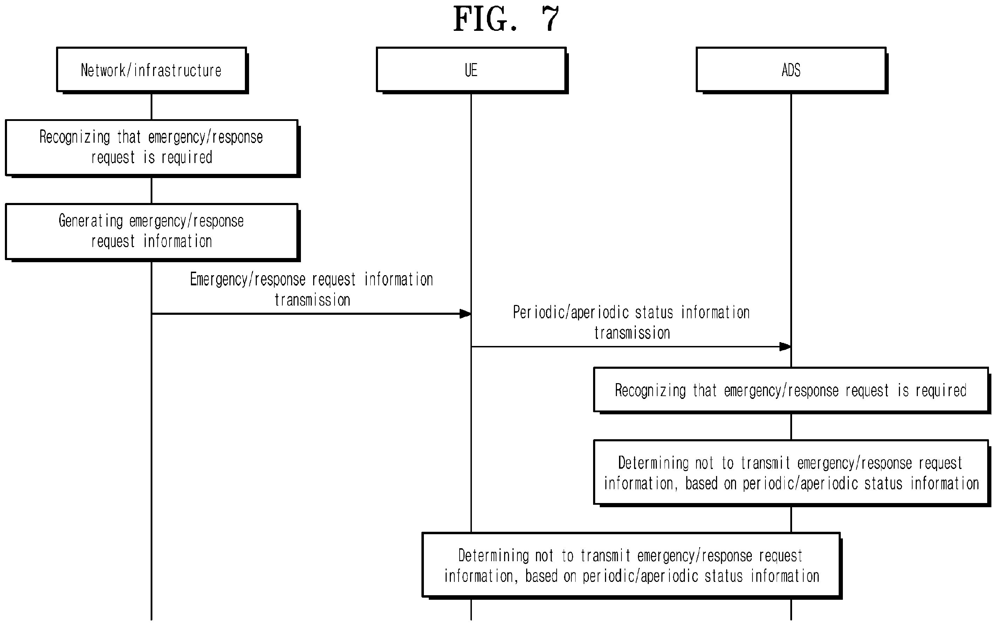

FIG. 7 illustrates data communication among an ADS, a UE, and a network/infrastructure according to embodiments.

An emergency situation control device (or ADS) according to embodiments may correspond to the vehicle control device 400 of FIG. 4 that performs the MRM in FIGS. 1 to 3, and correspond to the integrated autonomous vehicle controller 600 of the vehicle in FIG. 5.

The emergency situation control device 400 or 600 according to embodiments may execute the MRM response described before with reference to FIGS. 1 to 3 in the autonomous driving situation of the ADS of FIG. 6, and control an emergency situation, while performing data communication with the UE, the network, and/or the infrastructure as illustrated in FIG. 7.

The ADS according to embodiments may transmit emergency information and/or response request information to the UE.

Information transmitted and received between the ADS and the UE may be referred to as emergency/response request information. Specifically, the emergency/response request information may include emergency safety information, user fallback and action request information, user approval request information, and so on.

The emergency safety information may be notification information for warning of a safety hazard. When the ADS notifies the UE of the emergency safety information, it does not request a response from the UE. Conditions for generating the emergency safety information may include detection and/or reception of an unstable driving environment, detection and/or reception of an ODD violation requirement, and so on. When the ADS transmits the user fallback/action request information to the UE, it requests a user response from the UE. Conditions for generating the user fallback/action request information may include ODD violation, emergency vehicle approach, reckless driving vehicle approach, police car control, vehicle equipment failure, ADS failure, and so on.

When the ADS transmits the user approval request information to the UE, it requests a user response from the UE. The types of approval requests may include vehicle overtaking, passing an intersection, a tollgate, an IC, or the like, ADS level change, route selection, and so on.

In general, the emergency/response request information may be transmitted from the ADS to the UE. However, this information may be transmitted to the UE in advance via the network or infrastructure.

That is, when the network or infrastructure transmits the above information to the UE before the ADS transmits it to the UE, it may be unnecessary for the ADS to transmit the information to the UE redundantly, and various handling methods are required according to cases.

A case (hereinafter, referred to as a 'case of interest') in which emergency/response request information is transmitted to the UE in advance via the network or infrastructure is specifically described.

The emergency and/or response request information is transmitted to the UE in advance via the network and/or the infrastructure in the following cases.

The network (and/or the infrastructure) may notify the UE that an ODD violation is expected. The case of interest may include (1) a case in which an ODD violation is expected soon in terms of geography (e.g., a road ahead of the ADS vehicle is flooded, normal driving is impossible due to damage to a road ahead, and so on), (2) a case in which an ODD violation is expected soon in terms of time (e.g., an ODD violation is expected soon due to bad weather), and so on.

The network (and/or the infrastructure) may notify the UE that traffic control is in progress on a road ahead of the ADS vehicle. The traffic control may include, for example, traffic control due to an accident, drunk driving crackdown, and so on.

The network may notify the UE of information about an emergency and/or unexpected vehicle ahead and/or following the ADS vehicle. The emergency vehicle may include, for example, an emergency patient evacuation vehicle. The unexpected vehicle may include, for example, a drunk driving vehicle, a novice driving vehicle, a traffic law violation vehicle, and so on.

The network may receive the above emergency/response request information (flooding of a road ahead, expected bad weather, and so on) from a surrounding infrastructure, a surrounding vehicle, and so on. The network and/or the infrastructure may transmit the emergency and/or response request information to the ADS vehicle (subject vehicle) and the UE at the same time. From the UE's perspective, it may be more efficient in terms of latency to receive the emergency and/or response request information directly from the network and/or the infrastructure rather than through the ADS. It may be inefficient in terms of information processing and/or power saving of the ADS and the UE to receive the emergency and/or response request information already received from the network and/or the infrastructure from the ADS later.

In the case of interest, subsequent operations of the ADS and/or the UE are as follows. As a prerequisite, the ADS is capable of identifying that the UE has already recognized the emergency/response request information based on periodic or aperiodic status information received from the UE.

The ADS may identify that the UE has already recognized the emergency and/or response request information.

### (1) Aperiodic status information-based operation

For example, the UE may aperiodically transmit its current status information to the ADS.

For example, the UE may transmit aperiodic status information (including information indicating that the UE has received the emergency/response request information) to the ADS in response to receiving the emergency and/or response request information from the network and/or the infrastructure.

Meanwhile, the condition for triggering the aperiodic transmission is not limited to the above example.

### (2) Periodic status information-based operation

For example, the UE may periodically transmit its current status information to the ADS.

For example, the UE may transmit its current status information at intervals of a specific periodicity. The current status information may include information indicating that the UE has received the emergency/response request information.

The specific periodicity according to embodiments may be preset by an application, for example.

The specific periodicity according to embodiments may be, for example, a transmission periodicity of a sidelink radio resource control (RRC) message between the ADS and the UE.

The ADS may skip transmission of the emergency and/or response request information to the UE.

When the UE has already received the emergency/response request information, the redundant transmission of the emergency/response request information to the UE by the ADS i) causes inefficiency in information processing of the ADS and the UE, and ii) is inefficient in terms of power saving. Therefore, the ADS may skip the transmission of the emergency/response request information to the UE.

Referring to FIG. 7, the network/infrastructure identifies that an emergency/response request is required. The network/infrastructure generates emergency/response request information. The network/infrastructure transmits the emergency/response request information to the UE.

The UE transmits status information to the ADS periodically or aperiodically.

The ADS identifies that the emergency/response request is required. The ADS determines not to transmit the emergency/response request information based on the status information.

In response to the emergency/response request information, an emergency situation control operation is performed between the ADS and the UE.

Referring to FIG. 7, an emergency situation control method for transmitting and receiving information between an ADS and a UE may include periodically or aperiodically receiving status information from the UE by the ADS, the status information including information indicating that the UE has received emergency information, identifying an emergency situation based on the status information by the ADS, determining not to transmit the emergency information to the UE by the ADS, and controlling an emergency situation related to the emergency information by the ADS. Depending on whether the UE has received the emergency information from the network/infrastructure, the ADS may efficiently perform a data communication process with the UE.

Referring to FIG. 7, in response to the UE receiving the emergency information from at least one of the network or the infrastructure, the aperiodically received status information may be received from the UE, and the periodically received status information may be received based on a specific periodicity. The specific periodicity may be set by the UE or based on a transmission periodicity of a message related to a control layer between the UE and the ADS.

Referring to FIG. 7, the network or the infrastructure may generate the emergency information about the emergency situation, and the UE may receive the emergency information from at least one of the network or the infrastructure.

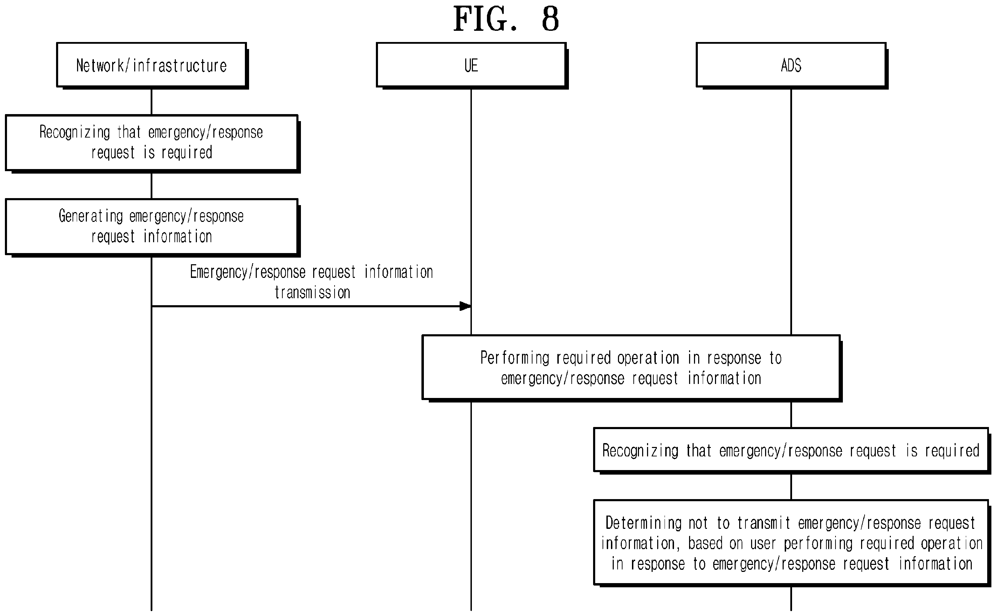

FIG. 8 illustrates data communication among an ADS, a UE, and a network/infrastructure according to embodiments.

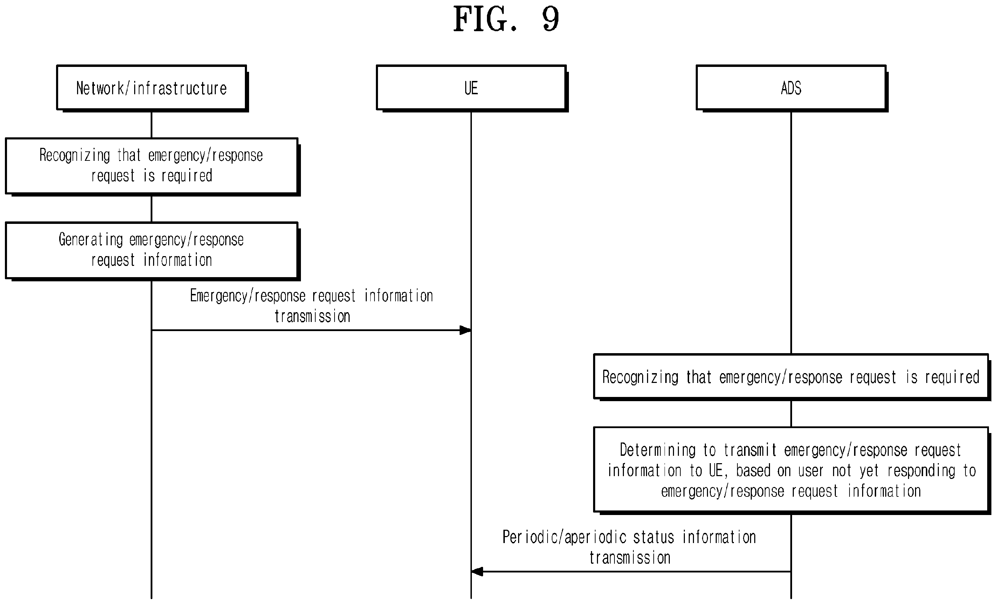

FIG. 9 illustrates data communication among an ADS, a UE, and a network/infrastructure according to embodiments.

The emergency situation control device 400 or 600 according to embodiments may execute the MRM response described before with reference to FIGS. 1 to 3 in the autonomous driving situation of the ADS as in FIG. 6, and perform data communication with the UE, the network, and/or the infrastructure and control an emergency situation as illustrated in FIG. 7 to 9.

In the case of interest, subsequent operations between the ADS and/or the UE are as follows.

The ADS may transmit emergency/response request information redundantly, only when the user has not yet responded to the emergency/response request information.

The response to the emergency/response request information according to embodiments may include a user fallback, a user action, a user approval, and so on. Although an emergency safety information notification is also included in the emergency/response request information, a user response may not be requested. The ADS may transmit the emergency/response request information to the UE redundantly, only when the user has not yet responded to the emergency/response request information. When the user performs a user fallback, user action, user approval, or the like in response to the emergency/response request information, the ADS may recognize this and determine that there is no need to transmit the emergency/response request information to the UE.

On the other hand, when the user has not yet responded to the emergency/response request information, but the ADS recognizes an emergency/response situation, the ADS may transmit the emergency/response request information redundantly to the UE. This redundant transmission from the ADS is effective in that it reminds the user to respond to the emergency/response request information.

Referring to FIG. 8, the network/infrastructure recognizes that an emergency/response request is required. The network/infrastructure generates emergency/response request information. The network/infrastructure transmits the emergency/response request information to the UE. The UE responds to the emergency/response request information and performs an action required for an emergency status based on the emergency/response request information in conjunction with the ADS.

The ADS recognizes that the emergency/response request is required. The ADS determines not to transmit the emergency/response request information to the UE based on the user performing the required action in response to the emergency/response request information.

Referring to FIG. 9, the network/infrastructure recognizes that an emergency/response request is required. The network/infrastructure generates emergency/response request information. The network/infrastructure transmits the emergency/response request information to the UE.

The ADS recognizes that the emergency/response request is required. The ADS determines to transmit the emergency/response request information to the UE based on the UE not responding to the emergency/response request information. The ADS transmits the emergency/response request information to the UE.

Referring to FIG. 8, controlling the emergency situation may include controlling the emergency situation based on the response of the UE that has received the emergency information from at least one of the network or the infrastructure, and determining not to transmit the emergency information may include determining not to transmit the emergency information based on the emergency situation being controlled based on the response of the UE.

Referring to FIG. 9, when the UE receives the emergency information from at least one of the network or the infrastructure, and there is no response from the UE that has received the emergency information, the emergency situation control method may further include identifying the emergency situation by the ADS, and transmitting the emergency information about the emergency situation to the UE by the ADS.

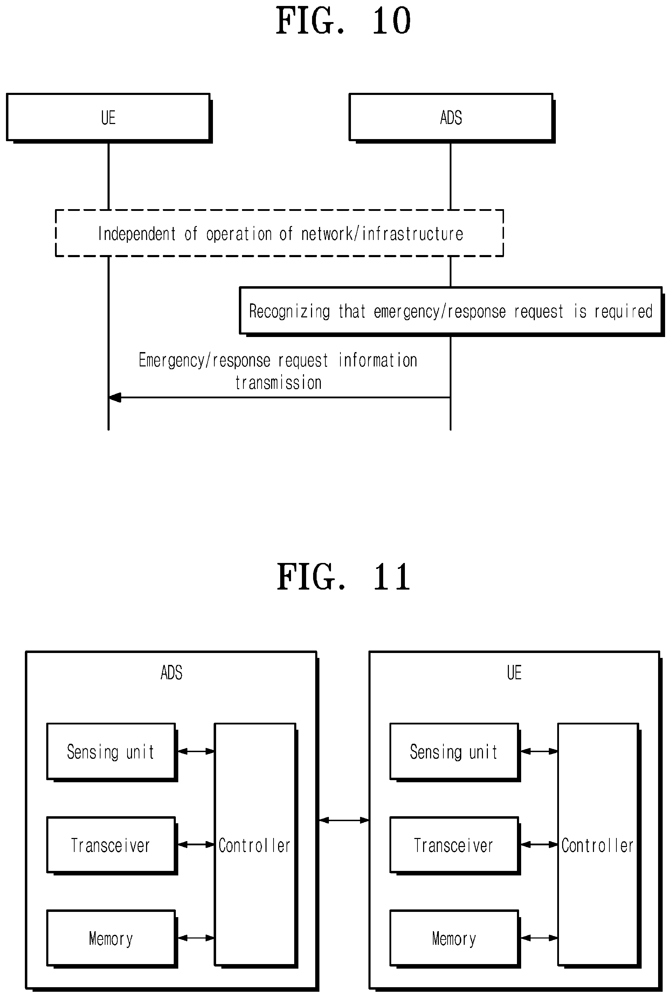

FIG. 10 illustrates data communication between an ADS and a UE according to embodiments.

The emergency situation control device 400 or 600 according to embodiments may execute the MRM response described before with reference to FIGS. 1 to 3 in the autonomous driving situation of the ADS as in FIG. 6, and perform data communication with the UE, the network, and/or the infrastructure and control an emergency situation as illustrated in FIG. 10.

In the case of interest, subsequent operations of the ADS/UE are as follows.

The ADS may transmit emergency/response request information to the UE regardless of whether the network/infrastructure has already transmitted the emergency/response request information to the UE.

When latency is small enough to cover an emergency/urgent situation and there is no special problem in terms of power saving, the ADS may transmit the emergency/response request information to the UE regardless of the existence of the network/infrastructure.

Referring to FIG. 10, the ADS identifies that an emergency/response request is required regardless of an operation of the network/infrastructure. The ADS transmits emergency/response request information to the UE.

Referring to FIG. 10, the emergency situation control method further includes identifying an emergency situation by the ADS, and transmitting emergency information about the emergency situation to the UE by the ADS. Identifying the emergency situation and transmitting the emergency information may be performed separately from the operation of at least one of the network or the infrastructure.

FIG. 11 illustrates the structures of an ADS and a UE according to embodiments.

The emergency situation control device 400 or 600 according to embodiments may execute the MRM response described before with reference to FIGS. 1 to 3 in the autonomous driving situation of the ADS as in FIG. 6, and perform data communication with the UE, the network, and/or the infrastructure and control an emergency situation as illustrated in FIGS. 7 to 10. The emergency situation control device 400 or 600 according to embodiments may correspond to the ADS of FIG. 11, and the UE may correspond to the UE of FIG. 11.

The ADS may include a sensing unit, a transceiver, a memory, and/or a controller. The sensing unit may include a camera sensor of a vehicle for determining an emergency situation. For the sensing unit, the description of FIG. 5 may be referred to.

The transceiver means a transceiver for transmitting and receiving emergency/response request information by the ADS

The memory may store instructions and/or information for operations of the ADS. The controller may be connected to the sensing unit, the transceiver, and/or the memory to control an emergency situation control operation of the ADS.

The UE may include a sensing unit, a transceiver, a memory, and/or a controller.

The sensing unit may include a camera sensor of the UE.

The transceiver may allow the UE to transmit and receive data to and from an ADS and/or a network/infrastructure.

The memory may store instructions and/or information for emergency situation control of the UE.

The controller may be connected to the sensing unit, the transceiver, and/or the memory to perform emergency situation control with the ADS.

Referring to FIG. 11, an ADS for transmitting and receiving information to and from a UE includes a memory, a transceiver, and a processor. The processor may periodically or aperiodically receive status information from the UE, the status information including information indicating that the UE has received emergency information, identifying an emergency situation based on the periodically or aperiodically received status information, determining not to transmit the emergency information to the UE, and controlling an emergency situation related to the emergency information.

Referring to FIG. 5, a mobile device (e.g., a vehicle) performing an emergency situation control method for transmitting and receiving information between an ADS and a UE includes a mobile unit moving the mobile device, a driving unit providing power to the mobile unit, and an ADS. The ADS may periodically or aperiodically receive status information from the UE, the status information including information indicating that the UE has received emergency information, identifying an emergency situation based on the periodically or aperiodically received status information, determining not to transmit the emergency information to the UE, and controlling an emergency situation related to the emergency information. The mobile device according to embodiments may include a UAM robot as well as the vehicle of FIG. 5.

The embodiments may enable an ADS to efficiently transmit emergency/response request information in an emergency status in conjunction with a network/infrastructure and a UE, and provide an effect of safely dealing with an emergency situation.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents.

The devices and methods may not be limited by the configurations and methods of the embodiments described above. The embodiments described above may be configured by being selectively combined with one another entirely or in part to enable various modifications.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory. The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. Further, the processor may be implemented as an encoder/decoder or the like for the operations of the embodiments described above.

As described above, related details have been described in the best mode for carrying out the embodiments.

As described above, the embodiments are fully or partially applicable to autonomous valet driving devices and systems.

Those skilled in the art may change or modify the embodiments in various ways within the scope of the embodiments.

## Claims

1. An emergency situation control method for transmitting and receiving information between an automated driving system, ADS, installed in a vehicle and a user equipment, UE, of a user of the vehicle, the method comprising:
periodically or aperiodically receiving status information from the UE, by the ADS, the status information including information indicating that the UE has already received emergency information from a network or an infrastructure;
identifying, by the ADS, an emergency situation;
determining, by the ADS, not to transmit the emergency information to the UE based on the status information indicating that the UE has already received the emergency information from the network or the infrastructure; and
controlling, by the ADS, driving of the vehicle for handling the emergency situation related to the emergency information.

2. The method of claim 1, wherein, in response to the UE receiving the emergency information from at least one of the network or the infrastructure, the status information is aperiodically received from the UE,
wherein the status information is periodically received from the UE based on a specific periodicity, and
wherein the specific periodicity is set by the UE or is set based on a transmission periodicity of a message related to a control layer between the UE and the ADS.

3. The method of claim 1 or 2, wherein the emergency information is generated by the network or infrastructure.

4. The method of any one of claims 1 to 3, the method further comprises:
controlling the driving of the vehicle for handling the emergency situation based on a response of the UE that has already received the emergency information from at least one of the network or the infrastructure; and
determining not to transmit the emergency information when the driving of the vehicle for handling the emergency situation is controlled based on the response of the UE.

5. The method of any one of claims 1 to 4, wherein, in response to the UE receiving the emergency information from at least one of the network or the infrastructure and there is no response from the UE that has already received the emergency information, the method further comprising:
identifying the emergency situation by the ADS; and
transmitting the emergency information about the emergency situation to the UE by the ADS.

6. The method of any one of claims 1 to 5, further comprising:
identifying the emergency situation by the ADS; and
transmitting the emergency information about the emergency situation to the UE by the ADS,
wherein the identifying of the emergency situation and the transmitting of the emergency information are performed separately from an operation of at least one of the network or the infrastructure.

7. An automated driving system, ADS, installed in a vehicle for transmitting and receiving information to and from a user equipment, UE, of a user of the vehicle, the system comprising:
a memory;
a transceiver; and
a processor configured to:
periodically or aperiodically receive status information from the UE, by the ADS, the status information including information indicating that the UE has already received emergency information from a network or an infrastructure;
identify an emergency situation;
determine not to transmit the emergency information to the UE based on the status information indicating that the UE has already received the emergency information from the network or the infrastructure; and
control driving of the vehicle for handling the emergency situation related to the emergency information.

8. The ADS of claim 7, wherein in response to the UE receiving the emergency information from at least one of the network or the infrastructure, the status information is aperiodically received from the UE,
wherein the status information is periodically received based on a specific periodicity from the UE, and
wherein the specific periodicity is set by the UE or is set based on a transmission periodicity of a message related to a control layer between the UE and the ADS.

9. The ADS of claim 7 or 8, wherein the emergency information is generated by the network or the infrastructure.

10. The ADS of any one of claims 7 to 9, wherein the processor is further configured to:
control the driving of the vehicle for handling the emergency situation based on a response of the UE that has already received the emergency information from at least one of the network or the infrastructure; and
determine not to transmit the emergency information when the driving of the vehicle for handling the emergency situation is controlled based on the response of the UE.

11. The ADS of any one of claims 7 to 10, wherein, in response to the UE receiving the emergency information from at least one of the network or the infrastructure and there is no response from the UE that has already received the emergency information, the processor is further configured to:
identify the emergency situation; and
transmit the emergency information about the emergency situation to the UE.

12. The ADS of any one of claims 7 to 11, wherein the processor is further configured to:
identify the emergency situation; and
transmit the emergency information about the emergency situation to the UE, and
wherein identification of the emergency situation and transmission of the emergency information are performed separately from an operation of at least one of the network or the infrastructure.

13. A vehicle for performing an emergency situation control method, the vehicle comprising:
a driving unit configured to provide power to a user equipment, UE; and
the ADS according to any one of claims 7 to 12.

14. The vehicle of claim 13, wherein the ADS comprises a processor configured to:
recognize that a response to the emergency situation is required by the driver;
and transmit the emergency information to the UE until the driver responds.

15. The vehicle of claim 13 or 14, wherein the processor is further configured to:
recognize that the driver has not responded to the emergency information sent to the UE; and
transmit the emergency information to the UE periodically or aperiodically.

## Patentansprüche

1. Verfahren zur Notfallsituationssteuerung zum Senden und Empfangen von Informationen zwischen einem automatisierten Fahrsystem, ADS, das in einem Fahrzeug installiert ist, und einem Benutzergerät, UE, eines Benutzers des Fahrzeugs, wobei das Verfahren umfasst:
periodisches oder aperiodisches Empfangen von Statusinformationen von dem UE durch das ADS, wobei die Statusinformationen Informationen enthalten, die anzeigen, dass das UE bereits Notfallinformationen von einem Netzwerk oder einer Infrastruktur empfangen hat;
Identifizieren einer Notfallsituation durch das ADS;
Bestimmen durch das ADS, die Notfallinformationen nicht an das UE zu senden, basierend auf den Statusinformationen, die anzeigen, dass das UE die Notfallinformationen bereits von dem Netzwerk oder der Infrastruktur empfangen hat; und
Steuern des Fahrens des Fahrzeugs durch das ADS zur Bewältigung der mit den Notfallinformationen in Zusammenhang stehenden Notfallsituation.

2. Verfahren nach Anspruch 1, wobei als Reaktion darauf, dass das UE die Notfallinformationen von dem Netzwerk und/oder der Infrastruktur empfängt, die Statusinformationen aperiodisch von dem UE empfangen werden,
wobei die Statusinformationen basierend auf einer spezifischen Periodizität periodisch von dem UE empfangen werden, und
wobei die spezifische Periodizität durch das UE eingestellt wird oder basierend auf einer Übertragungsperiodizität einer Nachricht eingestellt wird, die sich auf eine Steuerschicht zwischen dem UE und dem ADS bezieht.

3. Verfahren nach Anspruch 1 oder 2, wobei die Notfallinformationen durch das Netzwerk oder die Infrastruktur erzeugt werden.

4. Verfahren nach einem der Ansprüche 1 bis 3, wobei das Verfahren ferner umfasst:
Steuern des Fahrens des Fahrzeugs zur Bewältigung der Notfallsituation basierend auf einer Antwort des UE, das die Notfallinformationen bereits von dem Netzwerk und/oder der Infrastruktur empfangen hat; und
Bestimmen, die Notfallinformationen nicht zu senden, wenn das Fahren des Fahrzeugs zur Bewältigung der Notfallsituation basierend auf der Antwort des UE gesteuert wird.

5. Verfahren nach einem der Ansprüche 1 bis 4, wobei als Reaktion darauf, dass das UE die Notfallinformationen von dem Netzwerk und/oder der Infrastruktur empfängt und keine Antwort von dem UE vorliegt, das die Notfallinformationen bereits empfangen hat, das Verfahren ferner umfasst:
Identifizieren der Notfallsituation durch das ADS; und
Senden der Notfallinformationen über die Notfallsituation an das UE durch das ADS.

6. Verfahren nach einem der Ansprüche 1 bis 5, ferner umfassend:
Identifizieren der Notfallsituation durch das ADS; und
Senden der Notfallinformationen über die Notfallsituation an das UE durch das ADS,
wobei das Identifizieren der Notfallsituation und das Senden der Notfallinformationen getrennt von einem Betrieb des Netzwerks und/oder der Infrastruktur durchgeführt werden.

7. Automatisiertes Fahrsystem, ADS, das in einem Fahrzeug installiert ist, zum Senden von Informationen an und Empfangen von Informationen von einem Benutzergerät, UE, eines Benutzers des Fahrzeugs, wobei das System umfasst:
einen Speicher;
einen Transceiver; und
einen Prozessor, der eingerichtet ist zum:
periodischen oder aperiodischen Empfangen von Statusinformationen von dem UE durch das ADS, wobei die Statusinformationen Informationen enthalten, die anzeigen, dass das UE bereits Notfallinformationen von einem Netzwerk oder einer Infrastruktur empfangen hat;
Identifizieren einer Notfallsituation;
Bestimmen, die Notfallinformationen nicht an das UE zu senden, basierend auf den Statusinformationen, die anzeigen, dass das UE die Notfallinformationen bereits von dem Netzwerk oder der Infrastruktur empfangen hat; und
Steuern des Fahrens des Fahrzeugs zur Bewältigung der mit den Notfallinformationen in Zusammenhang stehenden Notfallsituation.

8. ADS nach Anspruch 7, wobei als Reaktion darauf, dass das UE die Notfallinformationen von dem Netzwerk und/oder der Infrastruktur empfängt, die Statusinformationen aperiodisch von dem UE empfangen werden,
wobei die Statusinformationen basierend auf einer spezifischen Periodizität periodisch von dem UE empfangen werden, und
wobei die spezifische Periodizität durch das UE eingestellt wird oder basierend auf einer Übertragungsperiodizität einer Nachricht eingestellt wird, die sich auf eine Steuerschicht zwischen dem UE und dem ADS bezieht.

9. ADS nach Anspruch 7 oder 8, wobei die Notfallinformationen durch das Netzwerk oder die Infrastruktur erzeugt werden.

10. ADS nach einem der Ansprüche 7 bis 9, wobei der Prozessor ferner eingerichtet ist zum:
Steuern des Fahrens des Fahrzeugs zur Bewältigung der Notfallsituation basierend auf einer Antwort des UE, das die Notfallinformationen bereits von dem Netzwerk und/oder der Infrastruktur empfangen hat; und
Bestimmen, die Notfallinformationen nicht zu senden, wenn das Fahren des Fahrzeugs zur Bewältigung der Notfallsituation basierend auf der Antwort des UE gesteuert wird.

11. ADS nach einem der Ansprüche 7 bis 10, wobei als Reaktion darauf, dass das UE die Notfallinformationen von dem Netzwerk und/oder der Infrastruktur empfängt und keine Antwort von dem UE vorliegt, das die Notfallinformationen bereits empfangen hat, der Prozessor ferner eingerichtet ist zum:
Identifizieren der Notfallsituation; und
Senden der Notfallinformationen über die Notfallsituation an das UE.

12. ADS nach einem der Ansprüche 7 bis 11, wobei der Prozessor ferner eingerichtet ist zum:
Identifizieren der Notfallsituation; und
Senden der Notfallinformationen über die Notfallsituation an das UE,
wobei das Identifizieren der Notfallsituation und das Senden der Notfallinformationen getrennt von einem Betrieb des Netzwerks und/oder der Infrastruktur durchgeführt werden.

13. Fahrzeug zum Durchführen eines Verfahrens zur Notfallsituationssteuerung, wobei das Fahrzeug umfasst:
eine Antriebseinheit, die dazu eingerichtet ist, einem Benutzergerät, UE, Leistung bereitzustellen; und
das ADS nach einem der Ansprüche 7 bis 12.

14. Fahrzeug nach Anspruch 13, wobei das ADS einen Prozessor umfasst, der eingerichtet ist zum:
Erkennen, dass eine Reaktion auf die Notfallsituation durch den Fahrer erforderlich ist; und
Senden der Notfallinformationen an das UE, bis der Fahrer reagiert.

15. Fahrzeug nach Anspruch 13 oder 14, wobei der Prozessor ferner eingerichtet ist zum:
Erkennen, dass der Fahrer auf die an das UE gesendeten Notfallinformationen nicht reagiert hat; und
Senden der Notfallinformationen periodisch oder aperiodisch an das UE.

## Revendications

1. Procédé de gestion de situation d'urgence permettant la transmission et la réception d'informations entre un système de conduite automatisée, ADS, installé dans un véhicule et un équipement utilisateur, UE, d'un utilisateur du véhicule, le procédé comprenant:
la réception, périodique ou apériodique, par l'ADS d'informations d'état provenant de l'UE, les informations d'état comprenant des informations indiquant que l'UE a déjà reçu des informations d'urgence provenant d'un réseau ou d'une infrastructure;
l'identification, par l'ADS, d'une situation d'urgence;
la détermination, par l'ADS, de ne pas transmettre les informations d'urgence à l'UE sur la base des informations d'état indiquant que l'UE a déjà reçu les informations d'urgence du réseau ou de l'infrastructure; et
la commande, par l'ADS, de la conduite du véhicule afin de gérer la situation d'urgence en fonction des informations d'urgence.

2. Procédé selon la revendication 1, dans lequel, dès que l'UE reçoit les informations d'urgence provenant au moins du réseau ou de l'infrastructure, les informations d'état sont reçues de manière apériodique en provenance de l'UE,
dans lequel les informations d'état sont reçues périodiquement en provenance de l'UE selon une périodicité spécifique, et
dans lequel la périodicité spécifique est définie par l'UE ou est déterminée en fonction d'une périodicité de transmission d'un message lié à une couche de commande entre l'UE et l'ADS.

3. Procédé selon la revendication 1 ou 2, dans lequel les informations d'urgence sont générées par le réseau ou l'infrastructure.

4. Procédé selon l'une quelconque des revendications 1 à 3, le procédé comprenant en outre:
la commande de la conduite du véhicule afin de gérer la situation d'urgence en fonction d'une réponse de l'UE ayant déjà reçu les informations d'urgence provenant d'au moins un parmi le réseau ou l'infrastructure; et
la détermination visant à ne pas transmettre les informations d'urgence lorsque la conduite du véhicule, nécessaire pour faire face à la situation d'urgence, est commandée en fonction de la réponse de l'UE.

5. Procédé selon l'une quelconque des revendications 1 à 4, dans lequel, dès que l'UE reçoit les informations d'urgence provenant d'au moins l'un parmi le réseau, l'infrastructure, et qu'il n'y a pas de réponse de l'UE ayant déjà reçu les informations d'urgence, le procédé comprend en outre:
l'identification de la situation d'urgence par l'ADS; et
la transmission par l'ADS des informations d'urgence concernant la situation d'urgence à l'UE.

6. Procédé selon l'une quelconque des revendications 1 à 5, comprenant en outre:
l'identification de la situation d'urgence par l'ADS; et
la transmission des informations d'urgence concernant la situation d'urgence à l'UE par l'ADS,
dans lequel l'identification de la situation d'urgence et la transmission des informations d'urgence sont effectuées indépendamment du fonctionnement du réseau ou de l'infrastructure, ou des deux.

7. Système de conduite automatisée, ADS, installé dans un véhicule et destiné à recevoir des informations en provenance d'un équipement utilisateur, UE, et à transmettre à ce dernier, d'un utilisateur du véhicule, le système comprenant:
une mémoire;
un émetteur-récepteur; et
un processeur configuré pour:
recevoir, de manière périodique ou apériodique, par l'ADS d'informations d'état provenant de l'UE, les informations d'état comprenant des informations indiquant que l'UE a déjà reçu des informations d'urgence provenant d'un réseau ou d'une infrastructure;
identifier une situation d'urgence;
déterminer à ne pas transmettre les informations d'urgence à l'UE sur la base des informations d'état indiquant que l'UE a déjà reçu les informations d'urgence du réseau ou de l'infrastructure; et
commander la conduite du véhicule afin de gérer la situation d'urgence en fonction des informations d'urgence.

8. ADS selon la revendication 7, dans lequel, dès que l'UE reçoit les informations d'urgence provenant au moins du réseau ou de l'infrastructure, les informations d'état sont reçues de manière apériodique en provenance de l'UE,
dans lequel les informations d'état sont reçues en provenance de l'UE, de manière périodique en fonction d'une périodicité spécifique; et
dans lequel la périodicité spécifique est définie par l'UE ou est déterminée en fonction d'une périodicité de transmission d'un message lié à une couche de commande entre l'UE et l'ADS.

9. ADS selon la revendication 7 ou 8, dans lequel l'urgence est générée par le réseau ou l'infrastructure.

10. ADS selon l'une quelconque des revendications 7 à 9, dans lequel le processeur est en outre configuré pour:
commander la conduite du véhicule afin de gérer la situation d'urgence en fonction d'une réponse de l'UE ayant déjà reçu les informations d'urgence provenant d'au moins un parmi le réseau ou l'infrastructure; et
déterminer à ne pas transmettre les informations d'urgence lorsque la conduite du véhicule, nécessaire pour faire face à la situation d'urgence, est commandée en fonction de la réponse de l'UE.

11. Système ADS selon l'une quelconque des revendications 7 à 10, dans lequel, lorsque l'UE reçoit les informations d'urgence provenant au moins soit du réseau, soit de l'infrastructure, et qu'aucune réponse n'est émise par l'UE ayant déjà reçu ces informations d'urgence, le processeur est en outre configuré pour:
identifier la situation d'urgence; et
transmettre les informations d'urgence concernant la situation d'urgence à l'UE.

12. ADS selon l'une quelconque des revendications 7 à 11, dans lequel le processeur est en outre configuré pour:
identifier la situation d'urgence; et
transmettre les informations d'urgence concernant la situation d'urgence à l'UE, et
dans lequel l'identification de la situation d'urgence et la transmission des informations d'urgence sont effectuées indépendamment du fonctionnement du réseau ou de l'infrastructure, ou des deux.

13. Véhicule destiné à mettre en œuvre un procédé de gestion de situation d'urgence, le véhicule comprenant:
une unité de commande configurée pour alimenter en énergie un équipement utilisateur, UE; et
l'ADS selon l'une quelconque des revendications 7 à 12.

14. Véhicule selon la revendication 13, dans lequel l'ADS comprend un processeur configuré pour:
reconnaître que le conducteur doit réagir à la situation d'urgence; et transmettre
les informations d'urgence à l'UE jusqu'à ce que le conducteur réagisse.

15. Véhicule selon la revendication 13 ou 14, dans lequel le processeur est en outre configuré pour:
constater que le conducteur n'a pas réagi aux informations d'urgence envoyées à l'UE; et
transmettre les informations d'urgence à l'UE de manière périodique ou apériodique.
